# EUROPEAN PATENT APPLICATION

(11) **EP 1 349 302 A2**
(43) Date of publication of application: **01.10.2003**
(21) Application number: 03075840.3
(22) Date of filing: 24.03.2003
(51) Int. Cl.: H04B 10/18

(54) **Optical transmission systems**

(30) Priority: 28.03.2002 US 109218; 28.06.2002 US 185112
(71) Applicant: Nortel Networks Limited, St. Laurent, Quebec H4S 2A9 (CA)
(72) Inventor: Fells, Julian A, Epping, Essex CM16 7AX (GB)
(74) Representative: Anderson, Angela

(57) **Abstract**

An optical transmission system comprises a transmitter 1 having an optical source 2 adapted to emit light, a modulator 4 operable to modulate the light to produce a modulated optical signal and a dispersion element 8 adapted to apply dispersion to the modulated optical signal. The optical signal being modulated by the application of predetermined chirp thereto and the modulated optical signal having predetermined dispersion applied thereto, such that the signal is discernible at a point, along either a positive or negative dispersion fibre 16, in a range between a minimum and a maximum distance relative to the transmitter 1.

## Description

The invention relates to optical networks and in particular to transmitter systems for optical networks.

In optical telecommunication networks, modulated optical signals are transported between network points or nodes by optical fibres. The signals are generated at transmitter modules which typically comprise an optical or light source, such as a laser diode, and a modulator, such as a Mach Zehnder or electroabsorption modulator.

Chromatic dispersion is a deleterious effect around which optical networks are designed. Each pulse in a digital, modulated optical signal has a spectrum of wavelengths and the refractive index of an optical fibre varies with wavelength. As a consequence, wavelengths at the leading edge of the pulse may propagate faster than wavelengths at the trailing edge, and the pulse will be caused to broaden or spread. The extent of broadening is related to the length of fibre traversed, and there comes a point or fibre length limit at which a pulse is too severely affected to be discernible and detectable at a receiver. At least, this is the case with standard transmission fibre, so-called non-dispersion shifted fibre (NDSF). Other types of fibre, such as, for example, Truewave, also give rise to broadening but as the dispersion is less, the broadening is at a lower rate.

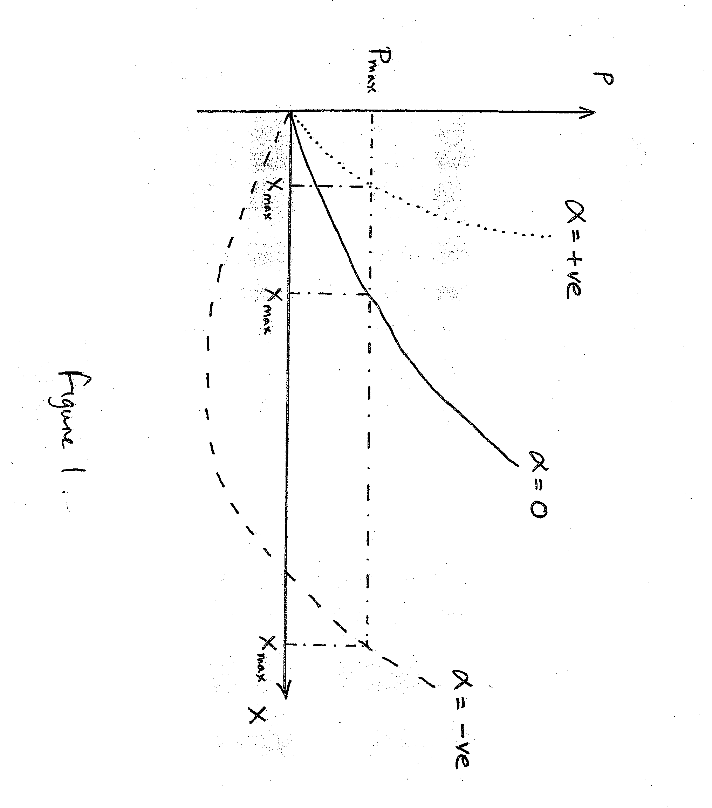

Figure 1 is a graph of dispersion penalty against distance travelled by an optical signal sent along an NDSF. An NDSF can tolerate a certain amount of penalty, up to the acceptable penalty limit Pₘₐₓ. The Pₘₐₓ limit defines the window of acceptable dispersion for the link, that is, the length Xₘₐₓ of fibre up to which the penalty P does not exceed the penalty limit Pₘₐₓ.

By utilising chirp, generally introduced at the modulator, the window of acceptable dispersion may be manipulated. Chirp is a difference in frequency dictated by the relationship between the phase and the intensity of a modulated optical signal with time. Chirp may be either zero, positive or negative. The solid line is a plot of the change in penalty P with distance X for the zero chirp condition (α=0). Positive chirp (α=+ve) has the effect exacerbating the pulse spreading brought about by dispersion. Hence, positive chirp reduces the window of acceptable dispersion and the distance Xₘₐₓ, as shown by the dotted line in figure 1. Negative chirp (α=-ve), on the other hand, has the effect, at least up to a certain point, of compressing pulses in a signal such as to increase the window of acceptable dispersion, as shown by the dashed line in figure 1. Pulse compression, within reason, does not compromise the operation of the link, and signals from a transmitter at the head of the link can be sent any distance along the link, so long as the distance is within the window of acceptable dispersion, without requiring dispersion compensation. In other words, a signal sent along the link will be discernible at a receiver placed between the transmitter and a distance Xₘₐₓ away from the transmitter.

In the wavelength division multiplexed (WDM) environment, transmission bands are divided into wavelength channels which are combined generally at a multiplexer and sent together as a multiplexed stream.

There is an ongoing problem as to how to effectively and efficiently compensate for dispersion in optical networks. In simple links, such as single channel point-to-point links, this is more straightforward because there is only a single channel and a known distance. However, state of the art optical networks tend to be more complex and are no longer necessarily single channel or point-to-point links. Latest networks may include optical switching where a whole fibre may be switched to a different route for protection/restoration or to adapt to changes in traffic flow. With wavelength routing, different wavelengths may propagate over different fibre routes using add/drop multiplexers. Dynamic wavelength routing is where flexible add/drop multiplexers are used so that the path that a signal follows can be altered.

Consequently, different wavelengths on the same fibre emerging at a receiving node may have propagated over different distances and those distances may change from time to time.

Dispersion compensating modules are commonly used to offset the effects of dispersion. For any link, a dispersion compensating module is selected which has a dispersion characteristic of equal magnitude and opposite sign to the link fibre. Typically the module comprises a length of dispersion compensating fibre. But, alternatively, the module may comprise a fibre grating, higher order mode fibre or a photonic crystal fibre.

Mach Zehnder (MZ) modulators are, at present, in more common use than electroabsorption (EA) modulators. Typically, a MZ modulator will be co-packaged with a distributed feedback laser (DFB). MZ modulators are relatively easy to make negative chirp but the downside is that it is very difficult to integrate them with a semi-conductor laser. Preferred laser semi-conductor materials are incompatible with preferred MZ modulator semi-conductor materials. EA modulators may be relatively easily integrated with semi-conductor lasers and, whilst they can readily be made to produce positive chirp, their downside is that it is quite difficult reliably to make them produce negative chirp.

US 5877881 describes the use of positive chirp to overcome the limitations imposed upon an optical link by self phase modulation (SPM). This occurs at high optical powers whereby the Kerr effect gives rise to an intensity dependent phase shift which appears as negative chirp in the signal. This negative chirp can result in pulse narrowing in the presence of a positive dispersion transmission fibre. However, the combination of negative chirp and SPM can result in excessive negative chirp causing pulses to narrow very quickly and then rebroaden quickly. Consequently, the dispersion compensating element at the transmitter or receiver has to be very closely matched to the transmission fibre in order that the pulses are discernible at the receiver. US 5877881shows that it is possible to achieve a specific transmission distance with fewer values of dispersion compensating element at the transmitter and receiver when positive chirp is used.

In a WDM environment, signal powers tend to be lower than on point-to-point single channel links in order to reduce interactions between adjacent channels. Such interactions, like cross phase modulation (XPM) or four wave mixing (FWM) tend to dominate over the single channel SPM effect.

It is very expensive to engineer every network by appropriately selecting a specific compensation module or alternative for each link. It is much more efficient to have a "one size fits all" or "plug and play" network where constituent elements, such as transmitter systems, are usable in a range of network scenarios. Consequently, what is now important is not necessarily achieving a maximum reach for an optical signal, but ensuring that a given transmitter can transmit signals that are discernible over a range of distances from a minimum distance up to a maximum given distance.

The present invention seeks to provide an improved optical transmission system.

According to an aspect of the present invention, there is provided an optical transmitter system, comprising a transmitter module adapted to produce a modulated optical signal discernible over a positive dispersion range x and a negative dispersion range y, and a dispersion element adapted to apply dispersion to the modulated optical signal, wherein the dispersion element is adapted to apply negative dispersion of magnitude substantially that of y, such that, when combined with the modulation of the light, the system is adapted to transmit a signal over a transmission link having any value of dispersion up to and substantially including (x + y), or the dispersion element is adapted to apply positive dispersion of magnitude substantially that of x, such that, when combined with the modulation of the light, the system is adapted to transmit a signal over a transmission link having any value of dispersion up to and substantially including - (x + y).

The preferred dispersion element is a fibre Bragg grating (FBG), particularly a linear chirped FBG. If the optical source is tunable, the preferred dispersion element is an FBG with a repeating response, which may be formed by periodically sampling the grating. In a WDM environment, each repeating response may be aligned to a channel wavelength.

Alternatively, the dispersion element may be a dispersion compensating fibre, higher order mode fibre, photonic crystal fibre, photonic bandgap waveguide, etalon (including MEMs), ring-resonator, cascaded Mach-Zehnder, virtually imaged phased array or arrayed waveguide grating.

Irrespective of what type of dispersion element is used, it either may be inherently polarisation dependent or it may be made polarisation dependent. In the case of a photonic crystal fibre, an asymmetry may be introduced into the lattice structure which well defines a polarisation axis, for instance, by filling in some of the holes in the lattice structure or by introducing an asymmetry in the positioning of the holes.

If the polarisation axis of the modulated optical signal is not aligned with the polarisation axis of the element, the element will not function or its performance will be degraded. Hence, the advantage of making the element polarisation sensitive, if it is not inherently so, is that the polarisation is well known and so the module and the element may be readily arranged in relation to one another such that the polarisation axis of the modulated optical signal matches the polarisation axis of the element. Alternatively, a polarisation maintaining component, such as a fibre tail, may be introduced between the modulator and the element, although this adds an additional optical interface which may culminate to increased loss and the cost of the system.

In a WDM environment, it is desirable to share components and reduce cost. If the dispersion element is polarisation dependent, it would ordinarily be necessary to either have a separate element for each wavelength or a polarisation maintaining multiplexer. An alternative arrangement would be a dispersion compensating element having a plurality of waveguides so that each wavelength could be coupled to a different waveguide a dispersion applied independently of any other. In other words, a plurality of wavelengths could have dispersion applied by the same, single dispersion element. For example, the lattice structure of a phototonic crystal fibre could be arranged as to offer a plurality of dependent, parallel waveguides. The wavelengths could be connected at the output of the element and multiplexed together. Such multiplexing could be achieved either by a single lens arrangement or a fibre coupling to a conventional multiplexer.

It should be appreciated that the abovementioned dispersion element may, alternatively, be disposed on an optical receiver system.

Therefore, another aspect of the invention provides for an optical receiver system, suitable for receiving an optical transmission signal discernible over a positive dispersion range x and a negative dispersion range y, comprising a dispersion element adapted to apply dispersion to the optical transmission signal, wherein the dispersion element is adapted to apply negative dispersion of magnitude substantially that of y, such that, the receiver is adapted to receive a signal over a transmission link having any value of dispersion up to and substantially including (x + y), or the dispersion element is adapted to apply positive dispersion of magnitude substantially that of x, such that, the receiver is adapted to transmit a signal over a transmission link having any value of dispersion up to and substantially including - (x + y).

A further aspect of the invention provides a method of compensating dispersion in an optical network comprising the steps of, providing a transmitter module and a dispersion element,
wherein the transmitter module produces a modulated optical signal discernible over a positive dispersion range x and a negative dispersion range y,
and wherein the dispersion element applies a negative dispersion of magnitude substantially to that of y, such that, when combined with the modulation of the light, the transmitter system is adapted to transmit a signal over a transmission link having any value of dispersion up to and substantially including (x + y) or the dispersion element applies a positive dispersion of magnitude substantially to that of x, such that, when combined with the modulation of the light, the transmitter is adapted to transmit a signal over a transmission link having any value of dispersion up to and substantially including -(x + y).

The term "discernible signal" as used herein means a signal whose state as a result of the net effects of negative and positive dispersion is such as to allow it to be reliably detected. Hence, the system according to the invention does not have to be configured, that is, the dispersion element does not require selection from a range of alternatives, in order to match the system for use in conjunction with a specific optical fibre transmission distance. One system, with one particular value of chirp and one particular value of dispersion, may be used in conjunction with various optical fibre transmission distances and different links, which may be point-to-point or could be static wavelength routed or dynamically reconfigurable.

A system according to the invention is considered from the point of view of a window of acceptable dispersion. For a signal sent along a positive dispersion NDSF, the window of acceptable dispersion can be thought of as being shifted so that it coincides with the dispersion introduced by the NDSF, or other positive dispersion fibre.

Another aspect of the present invention provides an optical transmitter system, suitable for transmitting optical signals along a transmission fibre, comprising a light source adapted to emit light, a modulator operable to modulate the light to produce a modulated optical signal, and a dispersion element adapted to apply dispersion to the modulated optical signal thereby producing a transmission signal discernible at a point along the transmission fibre, wherein the modulator is adapted to apply positive chirp to the optical signal to produce a positively chirped modulated optical signal, and the dispersion element is adapted to apply negative dispersion to the positively chirped modulated optical signal, thereby producing a transmission signal discernible at a point, along a positive dispersion transmission fibre, in a range between a minimum and maximum distance relative to the transmitter system.

A further aspect of the present invention provides a method of compensating dispersion in an optical network comprising the steps of,
providing a transmitter having an optical source, a modulator and a dispersion element,
emitting light from the optical source,
applying modulation to the light to produce a modulated optical signal,
applying dispersion to the modulated optical signal,
wherein the applied modulation is of positive chirp and the applied dispersion is negative, thereby producing an optical signal discernible at a point, along a positive dispersion transmission fibre, in a range between a minimum and maximum distance relative to the transmitter system.

It should be appreciated that the abovementioned dispersion element may, alternatively, be disposed on an optical receiver system.

Therefore, a further aspect of the present invention provides an optical receiver system, suitable for receiving an optical transmission signal transmitted along a fibre, comprising a dispersion element adapted to apply dispersion to the optical transmission signal to produce a discernible signal relative to that which was transmitted at a point along the fibre, in a range between a minimum and a maximum distance relative to the receiver, and optical detection means operable to detect the discernible signal, wherein the fibre is of positive dispersion and the dispersion element is adapted to apply negative dispersion to the optical transmission signal.

The use of positive chirp, rather than negative chirp as is more commonly used in prior art systems, facilitates the use of modulators, which can be made easily to positive chirp. The currently commonly used MZ modulators are a possibility, but so are EA modulators, which are relatively easier to make, if positive chirp, and can be more cost effective to produce. Furthermore, positive chirp EAs are operable over a wider optical bandwidth than MZ modulators. Moreover the optical source and laser modulator may be integrated, and EA modulators lend themselves to such integration. An integrated laser modulator (ILM) is an example of such an integrated device.

ILMs tend to include an optical isolator, but this may be omitted for this application if the negative dispersion element is a fibre Bragg grating (FBG), operable in reflection. Coupling of the ILM and the FBG is via an optical circulator which itself provides optical isolation from light reflected back from the system towards the source, thereby removing the need for the ILM to have an optical isolator.

In agile networks where different wavelengths may be routed along different routes, a tunable optical source may be utilised. Furthermore, using a tunable source reduces the number of different parts required to set up a system and also reduces the number of different spare parts required.

However, it will be appreciated that use of a tunable optical source is not limited to agile networks and is generally applicable to any other type of system or network.

An alternative to using a separate optical source and a modulator would be to have a directly modulated source, such as a directly modulated laser. The directly modulated laser would also be positively chirped.

The maximum distance is determined by a combination of the chirp parameter of the positive chirp applied to the modulated optical signal and the negative dispersion to which the chirped modulated optical signal is subjected. For 100Km reach for a typical NDSF, the positive chirp parameter may be about +0.7 and the negative dispersion value may have a magnitude of 1700ps/nm. The minimum distance away may be at the transmitter, that is, may be equal to zero. Alternatively, the minimum distance may be greater than zero. If a minimum link length is to be used, it is possible to increase the value of negative dispersion so as to increase the system reach.

A transmitter system according to the invention may include a plurality of optical sources and a modulator for each source, and the outputs of the modulators may be combined and sent to the same dispersion element. In other words, the dispersion element may be shared.

The transmitter system according to the invention is particularly suited to use in the WDM environment. In such an environment, the system according to the invention provides a "one size fits all" or "plug and play" solution. The system according to the invention, with a fixed chirp and a fixed dispersion compensation, can be used in a whole range of different links, which may be point-to-point, or could be static wavelength routed or dynamically reconfigurable.

A further aspect of the present invention provides an optical transmitter system, suitable for transmitting optical signals along a transmission fibre, comprising a light source adapted to emit light, a modulator operable to modulate the light to produce a modulated optical signal, and a dispersion element adapted to apply dispersion to the modulated optical signal thereby producing a transmission signal discernible at a point along the transmission fibre, the point wherein the modulator is adapted to apply phase optimised binary to the optical signal to produce a phase optimised binary modulated transmission signal.

A still further aspect of the present invention provides a method of compensating dispersion in an optical network comprising the steps of,
providing a transmitter having an optical source, a modulator and a dispersion element,
emitting light from the optical source,
applying modulation to the light to produce a modulated optical signal,
applying dispersion to the modulated optical signal,
wherein the modulator is adapted to apply phase optimised binary to the optical signal to produce a phase optimised binary modulated transmission signal.

It should be appreciated that the abovementioned dispersion element may, alternatively, be disposed on an optical receiver system.

Therefore, a further aspect of the present invention provides an optical receiver system, suitable for receiving an optical transmission signal transmitted along a fibre, comprising a dispersion element adapted to apply dispersion to the optical transmission signal to produce a discernible signal relative to that which was transmitted at a point along the fibre, in a range between a minimum and a maximum distance relative to the receiver, and optical detection means operable to detect the discernible signal, wherein the optical transmission signal is a phase optimised binary modulated signal.

A phase optimised binary signal is sometimes (incorrectly) also referred to as a "Phase duobinary signal".

The dispersion window in relation to a phase optimised binary modulated signal characteristically extends both negatively and positively. If dispersion of a suitable magnitude is applied to the phase optimised binary modulated signal, by the dispersion element, the dispersion window is shifted to extend the maximum distance along a fibre at which a transmission signal is discernible.

The suitable magnitude of dispersion, applied by the dispersion element, is typically greater than 2000 ps/nm, and preferably in the range of -2700 to -4300 ps/nm for a positive dispersion fibre of approximately 200Km NDSF, and in the range of +2700 to +4300 ps/nm for a negative dispersion fibre of approximately 200Km in reach.

Another aspect of the invention provides an optical transmitter system, suitable for transmitting optical signals along a transmission fibre, comprising a light source adapted to emit light, a modulator operable to modulate the light to produce a modulated optical signal, and a dispersion element adapted to apply dispersion to the modulated optical signal thereby producing a transmission signal discernible at a point along the transmission fibre in a range between a minimum and a maximum distance relative to the transmitter system, wherein the modulator is adapted to apply substantially zero chirp to the optical signal.

A further aspect of the present invention provides a method of compensating dispersion in an optical network comprising the steps of, providing a transmitter having an optical source, a modulator and a dispersion element,
emitting light from the optical source,
modulating the light to produce a modulated optical signal,
applying dispersion to the modulated optical signal,
wherein the modulator is adapted to apply substantially zero chirp to the optical signal to produce a phase optimised binary modulated transmission signal.

It should be appreciated that the abovementioned dispersion element may, alternatively, be disposed on an optical receiver system.

Therefore, a further aspect of the present invention provides an optical receiver system, suitable for receiving an optical transmission signal transmitted along a fibre, comprising a dispersion element adapted to apply dispersion to the received optical transmission signal to produce a discernible signal relative to that which was transmitted at a point along the fibre, in a range between a minimum and a maximum distance relative to the receiver, and optical detection means operable to detect the discernible signal, wherein the optical transmission signal is a substantially zero chirped modulated optical signal.

Similarly to the phase optimised binary modulated signal, the dispersion window of a substantially zero chirped optical signal characteristically extends both negatively and positively. Dispersion of a suitable sign and magnitude, applied by the dispersion element on the modulated signal, shifts the dispersion window to extend the maximum distance along a fibre at which a transmission signal is discernible.

In relation to a fibre of positive dispersion, dispersion in the range of approximately -900 to -1300 ps/nm is typically applied.

In relation to a fibre of negative dispersion, dispersion in the range of approximately +900 to +1300 ps/nm is typically applied.

A transmitter system according to the invention may be incorporated into an existing optical network such that the network consists of a mixture of existing transmitters, which may be of conventional negative chirp, and transmitter systems according to the invention.

A further aspect of the invention provides an optical network comprising at least one of any of the abovementioned embodiments of optical transmitter systems, located at one or more points in the network, and a plurality of receiver systems each located at other points in the network, wherein each of the receiver systems are located a range of distances away from the, or each, transmitter system and the or each transmitter system is adapted to establish a point to point link with any of the receivers.

A further aspect of the invention provides an optical network comprising at least one of any of the abovementioned embodiments of optical transmitter systems, linked, via a transmission path, to at least one receiver system, and at least one alternative transmission path between the, or each, optical transmitter and the, or each, receiver system, wherein the, or each, transmitter system is adapted to establish a link to the, or each, receiver system using one or more of the alternative transmission paths.

Furthermore, in relation to receivers, a further aspect of the present invention provides an optical network comprising a plurality of any of the abovementioned embodiments of optical receiver systems, each located at one of a plurality of points in the network, and at least one transmitter system located at another point in the network, wherein the, or each, transmitter system is a range of distances away from each of the receiver systems, each receiver system adapted to establish a point-to-point link with the, or each, transmitter system.

Moreover, the present invention also further provides for an optical network comprising at least one of any one of the abovementioned embodiments of optical receiver systems, linked, via a transmission path, to at least one transmitter system, and a plurality of alternative transmission paths between the, or each, optical receiver system and the, or each, transmitter system, wherein the, or each, receiver system is adapted to establish a link to one or more transmitter systems using one or more of the alternative transmission paths.

A further aspect of the present invention provides for an optical communication system, comprising a transmitter system linked, via a transmission link to a receiver system, the transmitter system comprising an optical source adapted to emit light, a modulator operable to modulate the light to produce a modulated optical signal discernible over a positive dispersion range x and a negative dispersion range y, the communication system also comprising a dispersion element adapted to apply dispersion to the modulated optical signal, wherein the dispersion element is disposed on at least one of the transmitter system and receiver system, and is adapted to apply negative dispersion of magnitude substantially that of y, such that, when combined with the modulation of the light, the transmitter is adapted to transmit a signal over a transmission link having any value of dispersion up to and substantially including (x + y), or the dispersion element is adapted to apply positive dispersion of magnitude substantially that of x, such that, when combined with the modulation of the light, the transmitter is adapted to transmit a signal over a transmission link having any value of dispersion up to and substantially including - (x + y).

The present invention further provides a signal as generated by or transmitted by a transmitter or any other aspect of the invention as aforementioned.

Embodiments of the invention will now be described, by way of example only, with reference to the following drawings, in which:
Figure 1 is a graphical representation of dispersion penalty against distance for a signal sent along a positive dispersion NDSF under different chirp parameters;
Figure 2 is a block schematic of a preferred embodiment of a transmitter system according to the invention;
Figure 3 is a block schematic of an alternative embodiment of a transmitter system according to the invention;
Figure 4 is a graphical representation of dispersion penalty against distance for positive and "negative" lengths of NDSF;
Figure 5 is a schematic diagram of a network in which a system according to the invention may be used;
Figure 6 is a schematic diagram of another network in which a system according to the invention may be used; and
Figure 7 is a schematic diagram of yet another network in which a system according to the invention may be used.

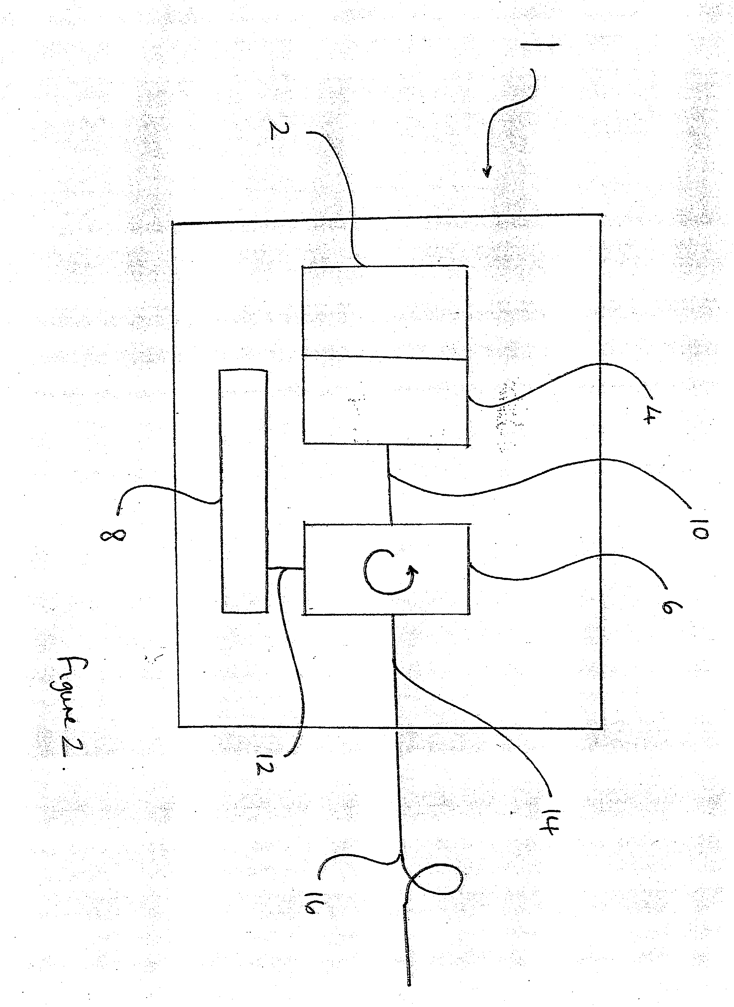

With reference to figure 2, a transmitter module 1 has an optical source 2, a modulator 4, coupling means 6 and a dispersion element 8. An output 10 from the modulator 4 is input to the coupling means 6. An input/output 12 from the coupling means 6 is connected to the dispersion element 8. An output 14 from the coupling means 6 is connected to a NDSF 16.

In the specific embodiment illustrated, the optical source 2 and the modulator 4 are a 10 Gbits/s DFB-electro absorption integrated laser modulator (ILM). The laser wavelength is positioned in relation to the edge of the ILM modulator absorption band so as to introduce pure positive chirp. A chirp factor α is also selected, in this specific case of + 0.7. The coupling means 6 is a three port circulator. The dispersion element is a linear chirped fibre Bragg grating (FBG) which has a bandwidth to fully cover the wavelength channels of interest but with sufficient guard bandwidth to cover any wavelength detuning effects that may occur due to ambient temperature variation. The output from the modulator is polarised and its axis of polarisation is aligned with the axis of polarisation of the FBG, which is polarisation dependent (although not all FBGs are polarisation dependent).

However, a shorter fibre Bragg grating may be used with an athermal package design operable to compensate the wavelength shift associated with the thermal dependence of refractive index by an opposite wavelength shift through strain using materials of differing thermal expansion coefficients.

The FBG has a dispersion of around -1700ps/m or, in combination with the positive chirp of +0.7, enough to compensate for approximately 100Km of standard positive dispersion NDSF.

The magnitude and sign of the dispersion applied by the FBG is equivalent to the dispersion applied by traversing a "negative" amount of fibre. The net effect of combining a positively chirping modulator with a negative fibre element is to shift the dispersion tolerance window in comparison to a negatively chirped modulator.

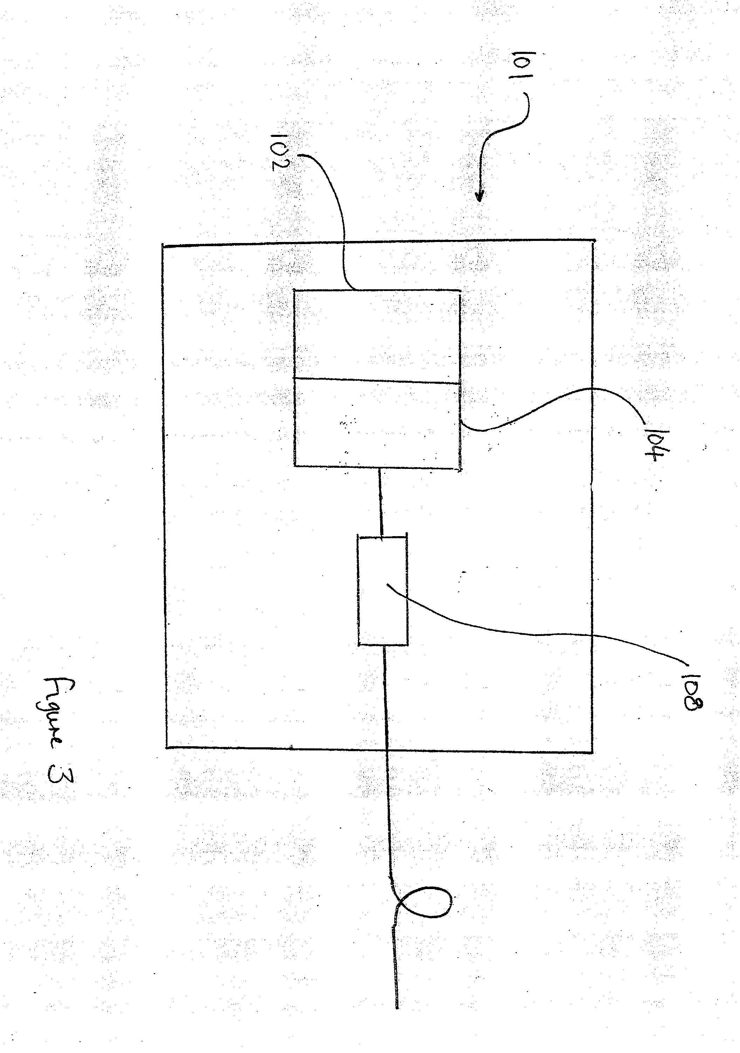

Referring to figure 3, an alternative transmitter module 101 has an optical source 102, a modulator 104 and a dispersion element 108. The optical source 102 and the modulator 102 are an integrated laser modulator (ILM) as described for the transmitter module 1, of figure 2. However, in this alternative transmitter module101 the dispersion element 108 is disposed thereon in line with the ILM. However, in the transmitter module 1 as shown in Figure 2, the coupling means 6 also acted as an isolator to isolate the light source from the system. Consequently, in the alternative transmitter module 101, the absence of such coupling means necessitates the need for means to isolate the optical source 102 from the system, such as, for example a bulk isolator within the ILM package.

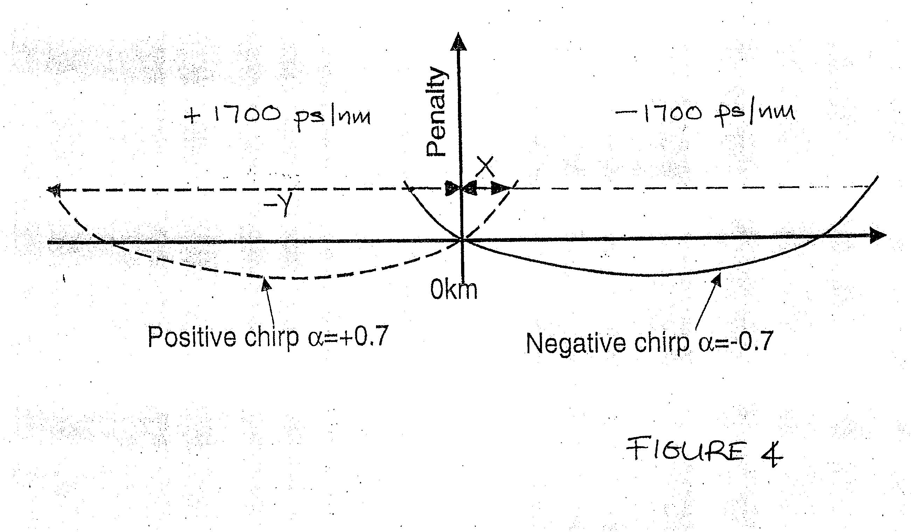

With reference to figure 4, for a negative chirped modulator, dispersion penalty against positive dispersion fibre length is as shown by the solid line. In other words, such a modulator could be utilised for traversing a positive dispersion fibre of up to XKm in length. For a positively chirped modulator, the dispersion penalty against negative dispersion fibre length is as shown by the broken line. By combining a negative dispersion element with the positively chirped modulator the dispersion tolerance window is shifted such that the transmitter output is positioned at the far left of the penalty graph. The negative dispersion introduced by the dispersion element is cancelled out by the positive dispersion NDSF. As a consequence, the transmitter is able to transmit over a distance of magnitude X+Y Km. Over this entire length, the quality of the signal is discernible at all intermediate points along the path, as well as the final receiver.

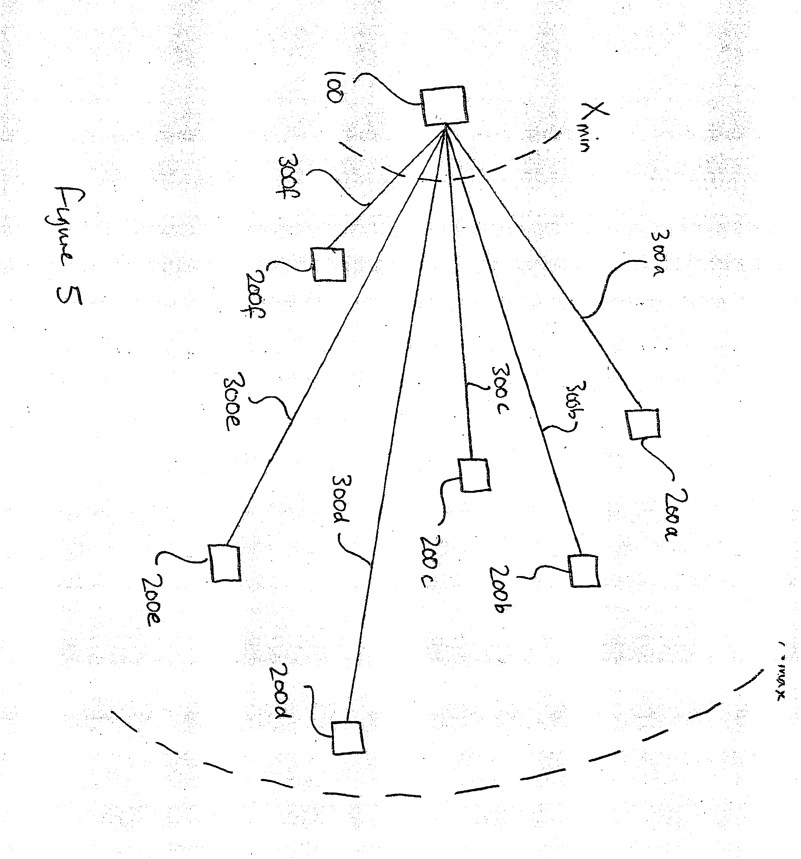

With reference to figure 5, a transmitter which produces a signal which is discernible at any of a range of points between a minimum and a maximum distance away from the transmitter may be used to make a point-to-point link with any of a number of receivers each of which is at a different distance away form the transmitter within the minimum to maximum range.

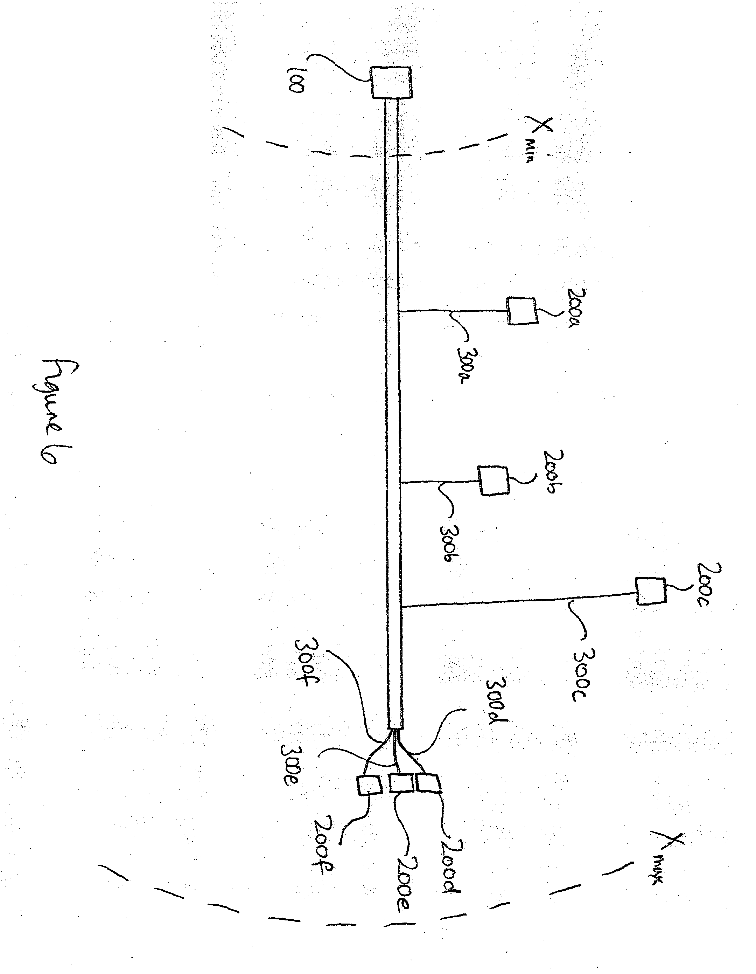

With reference to figure 6, a transmitter which produces a signal which is discernible at any of a range of points between a minimum and a maximum distance away from the transmitter may be used to make links with all of a number of receivers each of which is at a different distance away from the transmitter within a minimum and maximum range and connected to the transmitter by a different length path.

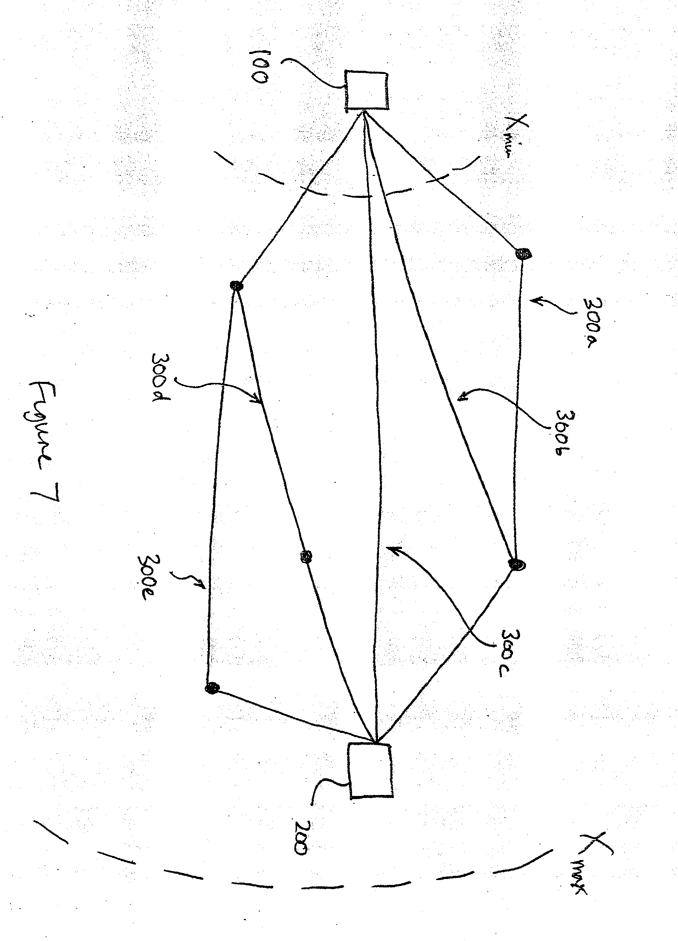

With reference to figure 7, a transmitter which produces a signal which is discernible at any of a range of points between a minimum and a maximum distance away from the transmitter may be used to make any one of a number of links with a receiver which is at a distance away from the transmitter within a minimum and maximum range and connected to the transmitter by a number of different length paths.

## Claims

1. An optical transmitter system, comprising a transmitter module adapted to produce a modulated optical signal discernible over a positive dispersion range x and a negative dispersion range y, and a dispersion element adapted to apply dispersion to the modulated optical signal, wherein the dispersion element is adapted to apply negative dispersion of magnitude substantially that of y, such that, when combined with the modulation of the light, the system is adapted to transmit a signal over a transmission link having any value of dispersion up to and substantially including (x + y), or the dispersion element is adapted to apply positive dispersion of magnitude substantially that of x, such that, when combined with the modulation of the light, the system is adapted to transmit a signal over a transmission link having any value of dispersion up to and substantially including - (x + y).

2. An optical transmitter system as claimed in Claim 1, wherein the transmitter module comprises an optical source adapted to emit light and a modulator operable to modulate the light.

3. An optical transmitter system as claimed in Claim 1 or 2, wherein the transmitter module is polarisation dependent and the dispersion element is polarisation dependent, and the transmitter module and the dispersion element are arranged in relation to one another such that their polarisation axes are aligned.

4. An optical transmitter system as claimed in claim 3 wherein the arrangement comprises means between the transmitter module and the dispersion element to align their polarisation axes.

5. An optical transmitter system as claimed in any one of Claims 1 to 4, wherein the dispersion element is adapted to apply dispersion to other modulated optical signals in addition to the said modulated optical signal.

6. An optical transmitter system according to any one of the preceding claims, wherein the modulator is adapted to apply positive chirp to the optical signal to produce a positively chirped modulated optical signal, and the dispersion element is adapted to apply negative dispersion to the positively chirped modulated optical signal, thereby producing a transmission signal discernible at a point, along a positive dispersion transmission fibre, in a range between a minimum and maximum distance relative to the transmitter system.

7. An optical transmitter system as claimed in any one of the preceding claims, wherein the modulator is an Electro-absorption modulator.

8. An optical transmitter system, as claimed in any one of the preceding claims, wherein the dispersion element comprises at least one of a fibre Bragg grating, a dispersion compensating fibre, a higher order mode fibre, a photonic crystal fibre, a photonic bandgap waveguide, an etalon, a ring resonator, a cascaded Mach-Zehnder, a Virtually Imaged phased array, and an arrayed waveguide grating.

9. An optical transmitter system as claimed in any one of the preceding claims, wherein the optical source is integrated with the modulator.

10. An optical transmitter system according to any one of the preceding claims, wherein the modulator is adapted to apply phase optimised binary to the optical signal to produce a phase optimised binary modulated transmission signal.

11. An optical transmitter system according to any one of the preceding claims, wherein the modulator is adapted to apply substantially zero chirp to the optical signal.

12. An optical transmitter system as claimed in Claim 10 or 11, wherein the transmission fibre is of positive dispersion and the dispersion element is adapted to apply negative dispersion to the modulated optical signal, thereby producing a transmission signal discernible at a point along the transmission fibre, in a range between a minimum and a maximum distance relative to the transmitter system.

13. An optical transmitter system as claimed in Claim 10 or 11, wherein the transmission fibre is of negative dispersion and the dispersion element is adapted to apply positive dispersion to the modulated optical signal, thereby producing a transmission signal discernible at a point along the transmission fibre, in a range between a minimum and a maximum distance relative to the transmitter system.

14. An optical transmitter system as claimed in any one of Claims 10-13, wherein the dispersion element comprises at least one of a fibre Bragg grating, a dispersion compensating fibre, a fibre Bragg grating, a higher order mode fibre, a photonic crystal fibre, a photonic bandgap waveguide, an etalon, a ring resonator, a cascaded Mach-Zehnder, a Virtually Imaged phased array, and an arrayed waveguide grating.

15. An optical network comprising at least one optical transmitter system, as claimed in any one of the preceding claims, located at one or more points in the network, and a plurality of receiver systems each located at other points in the network, wherein each of the receiver systems are located a range of distances away from the, or each, transmitter system and the or each transmitter system is adapted to establish a point to point link with any of the receivers.

16. An optical network comprising at least one optical transmitter system, as claimed in any one of the preceding claims, linked, via a transmission path, to at least one receiver system, and at least one alternative transmission path between the, or each, optical transmitter and the, or each, receiver system, wherein the, or each, transmitter system is adapted to establish a link to the, or each, receiver system using one or more of the alternative transmission paths.

17. A method of compensating dispersion in an optical network comprising the steps of,
providing an transmitter module and a dispersion element,
emitting light from the optical source,
wherein the transmitter module provides a modulated optical signal discernible over a positive dispersion range x and a negative dispersion range y,
applying a dispersion to the modulated optical signal,
and wherein the dispersion element applies a negative dispersion of magnitude substantially to that of y, such that, when combined with the
modulation of the light, the transmitter system is adapted to transmit a signal over a transmission link having any value of dispersion up to and
substantially including (x + y) or the dispersion element applies a positive dispersion of magnitude substantially to that of x, such that, when combined with the modulation of the light, the transmitter is adapted to transmit a signal over a transmission link having any value of dispersion up to and
substantially including -(x + y).

18. An optical communication system, comprising a transmitter system linked, via a transmission link to a receiver system, the transmitter system comprising an optical source adapted to emit light, a modulator operable to modulate the light to produce a modulated optical signal discernible over a positive dispersion range x and a negative dispersion range y, the communication system also comprising a dispersion element adapted to apply dispersion to the modulated optical signal, wherein the dispersion element is disposed on at least one of the transmitter system and receiver system, and is adapted to apply negative dispersion of magnitude substantially that of y, such that, when combined with the modulation of the light, the transmitter is adapted to transmit a signal over a transmission link having any value of dispersion up to and substantially including (x + y), or the dispersion element is adapted to apply positive dispersion of magnitude substantially that of x, such that, when combined with the modulation of the light, the transmitter is adapted to transmit a signal over a transmission link having any value of dispersion up to and substantially including - (x + y).

19. An optical receiver system, suitable for receiving an optical transmission signal discernible over a positive dispersion range x and a negative dispersion range y, comprising a dispersion element adapted to apply dispersion to the optical transmission signal, wherein the dispersion element is adapted to apply negative dispersion of magnitude substantially that of y, such that, the receiver is adapted to receive a signal over a transmission link having any value of dispersion up to and substantially including (x + y), or the dispersion element is adapted to apply positive dispersion of magnitude substantially that of x, such that, the receiver is adapted to receive a signal over a transmission link having any value of dispersion up to and substantially including - (x + y).

20. A signal generated by a transmitter as claimed in any one of claims 1-14.
